# EUROPEAN PATENT APPLICATION

(11) **EP 4 707 242 A1**
(43) Date of publication of application: **11.03.2026**
(21) Application number: 24818504.3
(22) Date of filing: 22.05.2024
(51) Int. Cl.: C01G 25/00, H01M 4/62, H01M 10/056

(54) **LITHIUM ION BATTERY MATERIAL AND PREPARATION METHOD THEREFOR AND USE THEREOF**

(30) Priority: 05.06.2023 CN 202310656029
(71) Applicant: Liongo (Changzhou) New Energy Co., Ltd., Changzhou, Jiangsu 213300 (CN)
(72) Inventor: ZOU, Kui, hangzhou, Jiangsu 213300 (CN); LI, Lifei, hangzhou, Jiangsu 213300 (CN); HE, Peiqi, hangzhou, Jiangsu 213300 (CN); ZHU, Chengqi, hangzhou, Jiangsu 213300 (CN); LI, Yanfeng, hangzhou, Jiangsu 213300 (CN); ZHAO, Hui, hangzhou, Jiangsu 213300 (CN); HUANG, Qifen, hangzhou, Jiangsu 213300 (CN); DI, Weimin, hangzhou, Jiangsu 213300 (CN); PAN, Yongfan, hangzhou, Jiangsu 213300 (CN)
(74) Representative: Acapo Onsagers AS
(86) International application number: PCT/CN2024/094767
(87) International publication number: WO 2024/250971

(57) **Abstract**

The present disclosure provides a lithium ion battery material and a preparation method therefor and a use thereof. The structural formula of the lithium ion battery material is Li4ZrF_{8-2X}O_{X}, wherein 0<X≤0.15. According to the present disclosure, oxygen doping is carried out on a Li₄ZrF₈ material by means of a zirconium-containing oxide, and oxygen doping is carried out at position F, so that the ionic conductivity of the Li₄ZrF₈ material is greatly improved. When the Li₄ZrF_{8-2X}O_{X} material is applied to a lithium ion battery, after the material reacts with water molecules in an electrolyte to generate hydroxyl, the water content in the electrolyte can be reduced.

## Description

### CROSS REFERENCE TO RELATED APPLICATIONS

The present invention claims priority to Chinese Patent Application No. 202310656029.4 filed with the China National Intellectual Property Administration on June 5, 2023, and entitled "LITHIUM ION BATTERY MATERIAL AND PREPARATION METHOD THEREFOR AND USE THEREOF", which is incorporated herein by reference in entirety.

### TECHNICAL FIELD

The present invention belongs to the technical field of battery materials, and particularly relates to a lithium-ion battery material, a preparation method therefor, and use thereof.

### BACKGROUND ART

Lithium-ion batteries are currently the most mature and high-performance electrochemical energy storage devices. Owing to their characteristics of high density and low cost, they have become ideal energy storage tools for new energy vehicles, photovoltaic power generation, and wind power. However, as application scenarios become increasingly diversified, there are increasingly higher requirements for safety, energy density, lifespan, and other aspects of lithium-ion batteries. Reducing usage of liquid electrolytes and developing solid-state batteries has become a consensus across the industry. However, constrained by current material systems, process maturity, manufacturing equipment and other aspects, the industrialization of all-solid-state batteries remains highly difficult. Under the condition of reducing the usage of liquid electrolytes in batteries, applying solid-state electrolyte materials with lithium-ion conductivity in batteries to prepare hybrid solid-liquid lithium-ion batteries has become the most practical development direction.

Fluoride solid-state electrolyte materials are a hot topic in current solid-state electrolyte research due to wide electrochemical window and strong chemical stability. Herein, as a type of fluoride solid-state electrolyte, Li₄ZrF₈ material has an electrochemical window of 1.21~6.38 V according to theoretical calculations, and thus Li₄ZrF₈ has broad application prospects in high-voltage systems. Literature (Rakhmatullin A, M Boča, J Mlynáriková, et al. Solid state NMR and XPS of ternary fluorido-zirconates of various coordination modes[J]. Journal of Fluorine Chemistry, 2018, 208) discloses that: at a temperature of 363 K, LiF (0.519 g, 20.008 mmol) and H₂O (20 cm³) were stirred, and then ZrF₄ (1.675 g, 9.999 mmol) was added; the above reaction mixture was boiled for 5 min, and cooled to 363 K, and then 10% HF (90 cm³) was slowly added; as the solution began to cool, small crystals started to precipitate, and the above solution was filtered through filter paper to remove a precursor, yielding Li₄ZrF₈ material. The above preparation method for Li₄ZrF₈ involves a cumbersome and time-consuming process, and yields the Li₄ZrF₈ material with relatively low ionic conductivity.

Currently, the main components of the liquid electrolytes used in the lithium-ion batteries are lithium salts and organic solvents. Both the lithium salts and the organic solvents are highly prone to absorbing moisture from environment. As the most commonly used lithium salt, LiPF₆ has a quite high solubility in water. In commercial lithium-ion batteries, moisture content of the liquid electrolytes is typically controlled at around 50 ppm. The hydrolysis reaction equation of LiPF₆ can be expressed as: LiPF₆ + H₂O → POF₃↑ + HF + LiF↓. Therefore, reducing the moisture in the liquid electrolytes has always been a key focus and difficult point in the research and development of the liquid electrolytes of the lithium-ion batteries.

### SUMMARY

In view of this, the objective of the present invention is to provide a lithium-ion battery material, a preparation method therefor, and use thereof, where the material has a relatively high ionic conductivity. The present invention further provides a solid-state electrolyte material for hybrid solid-liquid systems (batteries). When applied to lithium-ion batteries, Li₄ZrF_{8-2X}O_{X} material is in full contact with the liquid electrolytes, which is conducive to reducing moisture in the liquid electrolytes and improving cycle stability of the batteries.

The present invention provides a lithium-ion battery material, wherein a structural formula thereof is Li₄ZrF_{8-2X}O_{X}, where 0 < X ≤ 0.15.

The present invention provides a preparation method for a lithium-ion battery material, including steps of:
mixing a zirconium source, a lithium source, and a fluorine-containing acid solution, followed by reacting and filtering to obtain a precursor;
ball-milling the precursor and a zirconium-containing oxide in a medium to obtain a slurry; and
subjecting the slurry to drying and sintering, to obtain the lithium-ion battery material having a following general formula:

   Li₄ZrF_{8-2X}O_{X},

   where 0 < X ≤ 0.15.

In the present invention, the zirconium source is zirconium carbonate; and the lithium source is selected from lithium carbonate and/or lithium hydroxide;
the fluorine-containing acid solution is hydrofluoric acid;
the zirconium-containing oxide is one or more selected from the group consisting of zirconium oxide, lithium zirconate, and zirconium hydroxide; and
the medium is one or more selected from the group consisting of ethanol, isopropanol, n-butanol, n-hexane, N-methylpyrrolidone, acetonitrile, dimethylformamide, and dimethyl sulfoxide.

In the present invention, a temperature of the sintering is 400~800 °C, and a duration of the sintering is 12~24 h.

The lithium-ion battery material of the above technical solutions, or the lithium-ion battery material prepared by the preparation method of the above technical solutions, as a solid-state electrolyte, is applied in positive electrode coating materials, liquid electrolyte additives, positive electrode plate additives, negative electrode plate additives, or separator coating materials.

The present invention provides a coating process for a positive electrode material, including steps of:
using the lithium-ion battery material Li₄ZrF_{8-2X}O_{X} of the above technical solutions as a solid-state electrolyte, coating the lithium-ion battery material on a surface of the positive electrode material, followed by sintering, where
a temperature of the sintering is 300~600 °C and a duration of the sintering is 5~10 h; and
a rotational speed of coating equipment is 10~550 rpm, and a duration of the coating is 1~3 h.

The present invention provides a solid-state electrolyte material for hybrid solid-liquid systems, including the lithium-ion battery material Li₄ZrF_{8-2X}O_{X} of the above technical solutions and liquid electrolytes, where
the liquid electrolytes include LiPF₆

The present invention provides a use of a solid-state electrolyte material for hybrid solid-liquid systems, wherein the solid-state electrolyte material for hybrid solid-liquid systems of the above technical solution is applied to energy storage systems of lithium-ion batteries, sodium-ion batteries, potassium-ion batteries, aluminum-ion batteries, and fuel cells.

The present invention provides a battery, including an electrode plate and liquid electrolytes, where the electrode plate includes an active material and the lithium-ion battery material of the above technical solutions blended in the active material; and
the liquid electrolytes include LiPF₆.

The present invention provides a battery, including a coated separator and liquid electrolytes, where
the coated separator includes a base membrane and the lithium-ion battery material of the above technical solutions coated on a surface of the base membrane, and
the liquid electrolytes include LiPF₆.

The present invention provides a lithium-ion battery material, wherein a structural formula thereof is Li₄ZrF_{8-2X}O_{X}, where 0 < X ≤ 0.15. The present invention performs oxygen doping on the Li₄ZrF₈ material with a zirconium-containing oxide, and a composition of doped material is Li₄ZrF_{8-2X}O_{X}. Oxygen doping at F sites achieves a significant improvement in ionic conductivity of the Li₄ZrF₈ material. In addition, the preparation method for the lithium-ion battery material is simple and easy to implement.

The present invention further provides a solid-state electrolyte material for hybrid solid-liquid systems. When applied to lithium-ion batteries, Li₄ZrF_{8-2X}O_{X} material is in full contact with the liquid electrolytes. Current commercial liquid electrolytes contain trace amounts of moisture (≤ 50 ppm). Because the electronegativity of fluorine element is much greater than that of hydrogen and oxygen elements, fluoride bonds formed with metal ions are extremely stable and less prone to breaking. Therefore, it is difficult for fluoride crystals to generate free metal ions and fluoride ions on their surface, thus preventing reaction with water molecules to generate hydroxyl groups. The present invention changes surface state of the Li₄ZrF_{8-2X}O_{X} material through oxygen doping at the F sites. When in full contact with the liquid electrolytes, the Li₄ZrF_{8-2X}O_{X} material can react with trace amounts of water (≤ 50 ppm) in the liquid electrolytes, generating hydroxyl groups on parts of the Li₄ZrF_{8-2X}O_{X} material surface, forming Li₄ZrF₈₋₂xOx·(OH)_{y}, which is conducive to eliminating the moisture from the liquid electrolytes, while effectively reducing hydrolysis side reactions of LiPF₆.

### BRIEF DESCRIPTION OF DRAWING

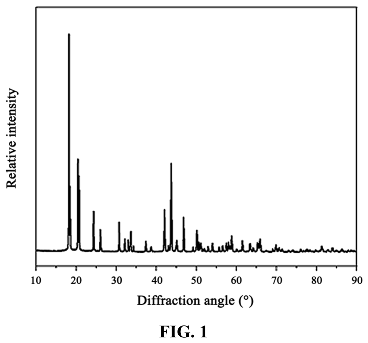

FIG. 1 is a diffraction pattern of a crystal structure of Li₄ZrF_{7.7}O_{0.15} prepared in Example 1 of the present invention.

### DETAILED DESCRIPTION OF EMBODIMENTS

The present invention provides a lithium-ion battery material, wherein a structural formula of the lithium-ion battery material is Li₄ZrF_{8-2X}O_{X}, where 0 < X ≤ 0.15.

In the present invention, the X is 0.15, 0.05, 0.1, 0.12, or 0.14.

The present invention provides a preparation method for a lithium-ion battery material, including steps of:
mixing a zirconium source, a lithium source, and a fluorine-containing acid solution, followed by reacting and filtering to obtain a precursor;
ball-milling the precursor and a zirconium-containing oxide in a medium to obtain a slurry; and
subjecting the slurry to drying and sintering, to obtain the lithium-ion battery material having a following general formula:

   Li₄ZrF_{8-2X}O_{X},

   where 0 < X ≤ 0.15.

In the present invention, through oxygen doping at F sites, i.e., using the oxygen element for partially doping at the F sites, due to the high electronegativity of the F element, it has strong adsorption capacity for Li⁺, thus hindering Li⁺ migration. In Li₄ZrF₈ material, the F element occupies a relatively large number of sites, thus, appropriate oxygen element doping can significantly improve the ionic conductivity of the Li₄ZrF₈ material. The method provided in the present invention is low-cost, simple to operate, easy to implement, and suitable for industrial mass production.

In the present invention, the zirconium source is zirconium carbonate; and the lithium source is selected from lithium carbonate and/or lithium hydroxide.

In the present invention, the zirconium-containing oxide is one or more selected from the group consisting of zirconium oxide, lithium zirconate, and zirconium hydroxide. The zirconium-containing oxide provides oxygen (O) element, which is doped at some F sites, achieving a significant improvement in the ionic conductivity of Li₄ZrF₈ material.

In the present invention, the medium is one or more selected from the group consisting of ethanol, isopropanol, n-butanol, n-hexane, N-methylpyrrolidone, acetonitrile, dimethylformamide, and dimethyl sulfoxide.

In the present invention, reaction duration after mixing the zirconium source, the lithium source, and the fluorine-containing acid solution is 4.5~5.5 h; and in a specific embodiment, the reaction duration is 5 h.

In the present invention, the fluorine-containing acid solution is hydrofluoric acid, where the hydrofluoric acid is a 40 wt% aqueous solution of hydrogen fluoride. The medium used in ball milling is one or more selected from the group consisting of ethanol, isopropanol, n-butanol, n-hexane, NMP (N-methylpyrrolidone), acetonitrile (CH₃CN), dimethylformamide (DMF), and dimethyl sulfoxide (DMSO). Zirconium balls with a diameter ranging from 0.1 mm to 3 mm are used for the ball milling. In specific embodiments, 1 mm zirconium balls or 0.5 mm zirconium balls are used for the ball milling. The lithium-ion battery material is in powder form.

In the present invention, a temperature of the sintering is 400~800 °C, and a duration of the sintering is 12~24 h. In specific embodiments, the temperature of the sintering is 600 °C, 800 °C, 400 °C, or 500 °C; and the duration of the sintering is 12 h.

The present invention performs oxygen doping on the Li₄ZrF₈ material through a zirconium-containing oxide, and a composition of doped material is Li₄ZrF_{8-2X}O_{X}. In the present invention, the lithium-ion battery material Li₄ZrF_{8-2X}O_{X} prepared through oxygen doping at the F sites reacts with trace amounts of water in the liquid electrolytes, generating hydroxyl groups on the Li₄ZrF_{8-2X}O_{X} material surface. In addition, a significant improvement in the ionic conductivity of the Li₄ZrF₈ material is also achieved.

In specific embodiments, X in the lithium-ion battery material is 0.15, 0.05, 0.1, 0.12 or 0.14.

The present invention provides a coating process for a positive electrode material, including steps of:
using the lithium-ion battery material Li₄ZrF_{8-2X}O_{X} of the above technical solutions as a solid-state electrolyte, coating the lithium-ion battery material on a surface of the positive electrode material, followed by sintering, where
a temperature of the sintering is 300~600 °C, and a duration of the sintering is 5~10 h; and
a rotational speed of coating equipment is 10~550 rpm, and a duration of the coating is 1~3 h.

In the present invention, a mass ratio of the positive electrode material to the lithium-ion battery material Li₄ZrF_{8-2X}O_{X} prepared by the preparation method of the above technical solutions is 95~105:1. The present invention found that after oxygen doping at the F sites, the crystal structure still belongs to orthorhombic crystal system, Pnma space group.

Because energy bands of 3d orbitals of Ni and 2p orbitals of oxygen overlap in the positive electrode material, with the increase of an applied voltage, under a highly delithiated state (high charge state), O²⁻ is oxidized, and peroxide or superoxide species are formed, leading to electrode deoxidation, causing transition metal ions to form unstable, highly oxidizing byproducts, and resulting in occurrence of an interfacial phase transition. After coating the Li₄ZrF_{8-2X}O_{X} material on a ternary positive electrode material, when the Li₄ZrF_{8-2X}O_{X} material on the surface comes into contact with the liquid electrolytes, Li₄ZrF_{8-2X}O_{X} reacts with water molecules in the liquid electrolytes to generate hydroxyl groups on the surface, forming Li₄ZrF_{8-2X}O_{X}·(OH)_{y}, which is conducive to reducing the moisture in the liquid electrolytes and improving cycle stability of the battery.

In the present invention, the positive electrode material is LiNiₓCo_{y}M_{1-x-y}O₂, where M = Al or Mn, 0.8 ≤ x < 1, 0 ≤ y ≤ 0.2; when M = Al, the ternary positive electrode material can be abbreviated as NCA, and when M = Mn, the ternary positive electrode material can be abbreviated as NCM.

The equipment used in the coating of the present invention includes, but is not limited to, a high-speed mixer or a three-dimensional mixer. In the present invention, the coating is carried out at a rotational speed of 10~550 rpm for a duration of 1~3 h.

The present invention preferably uses the coated ternary positive electrode material as a positive electrode to prepare a coin cell. The coin cell includes the coated ternary positive electrode material prepared by the preparation method of the technical solutions and liquid electrolytes, where
the liquid electrolytes include a lithium salt and a mixed solvent, where the mixed solvent is a mixture of ethylene carbonate, dimethyl carbonate, and diethyl carbonate.

In a specific embodiment, the lithium salt is LiPF₆; and the mixed solvent is specifically a mixture of ethylene carbonate, dimethyl carbonate, and diethyl carbonate in a volume ratio of 1:1:1.

The present invention provides a solid-state electrolyte material for hybrid solid-liquid systems, including the lithium-ion battery material Li₄ZrF_{8-2X}O_{X} of the above technical solutions and liquid electrolytes, where
the liquid electrolytes include LiPF₆.

The present invention provides a use of a solid-state electrolyte material for hybrid solid-liquid systems. The solid-state electrolyte material for hybrid solid-liquid systems of the above technical solution is applied to energy storage systems of lithium-ion batteries, sodium-ion batteries, potassium-ion batteries, aluminum-ion batteries, and fuel cells.

The present invention provides a battery, including an electrode plate and liquid electrolytes, where the electrode plate includes an active material and the lithium-ion battery material of the above technical solutions blended in the active material; and
the liquid electrolytes include LiPF₆.

In present invention, the electrode plate is a positive electrode plate or a negative electrode plate. If it is the positive electrode plate, the active material is a positive electrode active material, and a mass ratio of the positive electrode active material to the lithium-ion battery material is 100:0.95~1.05; and the mixed solvent in the liquid electrolytes is preferably a mixture of ethylene carbonate, dimethyl carbonate, and diethyl carbonate in a volume ratio of 1:1:1. If it is the negative electrode plate, the active material is a negative electrode active material, and a mass ratio of the negative electrode active material to the lithium-ion battery material is 100:0.95~1.05; and the mixed solvent in the liquid electrolytes is preferably a mixture of ethylene carbonate, dimethyl carbonate, and diethyl carbonate in a volume ratio of 1:1:1.

In batteries, the lithium-ion battery material is blended in the electrode plates as electrodes, and reacts with water molecules in the liquid electrolytes to generate hydroxyl groups on the surface, which is conducive to reducing the moisture in the liquid electrolytes and improving the cycle stability of the batteries.

The present invention provides a battery, including a coated separator and liquid electrolytes, where
the coated separator includes a base membrane and the lithium-ion battery material of the above technical solutions coated on a surface of the base membrane, and
the liquid electrolytes include LiPF₆.

The lithium-ion battery material of the above technical solutions included in the coated separator reacts with water molecules in the liquid electrolytes to generate hydroxyl groups on the surface, which is conducive to reducing the moisture in the liquid electrolytes and improving the cycle stability of the battery.

The present invention employs the following methods to apply and test the material.

### 1. Ionic conductivity testing:

0.1~5 g of the above Li₄ZrF_{8-2X}O_{X} material is taken. Using a mold with a diameter of 10 mm~15 mm, a pressure of 5~15 MPa is applied in a benchtop powder press, and maintained for 10~20 min before demolding to obtain a thin sheet. The above thin sheet is placed in a sintering furnace, heated to 300~600 °C at a rate of 1~3 °C, and held at the temperature for 12~20 h, and then a ceramic sheet required for testing is obtained. The surface of the ceramic sheet is gently polished using 1000-grit sandpaper moistened with alcohol according to a cross-hatching method to remove surface impurities and ensure uniform electrolyte thickness in all locations. Thickness L of the sintered sheet is measured using a vernier caliper, a gold blocking electrode is deposited using an ion sputtering apparatus, and the ionic conductivity of the Li₄ZrF_{8-2X}O_{X} material is tested using alternating-current (AC) impedance.

### 2. Coating separator with Li₄ZrF_{8-2X}O_{X}

A base membrane is a polyolefin-based separator, including but not limited to polyethylene (PE), polyvinyl chloride (PVC), polyvinylidene fluoride (PVDF), polymethyl methacrylate (PMMA), polyacrylonitrile (PAN), and polypropylene (PP), where PE and PP are preferred as the base membrane.

The thickness of the base membrane is 5~30 µm, and the thickness of the base membrane is preferably 7 µm, 9 µm, or 12 µm.

The base membrane is coated with the Li₄ZrF_{8-2X}O_{X} material on both sides, where the coating thickness is 0.5~5 µm, preferably, 1 µm, 2 µm, or 3 µm.

Liquid electrolytes are prepared by dissolving 1 M LiPF₆ in ethylene carbonate (EC)/dimethyl carbonate (DMC)/diethyl carbonate (EMC) (with a volume ratio of 1:1:1). In an argon-filled glove box, the separator coated on both sides is placed in the liquid electrolytes and soaked at 25 °C for 72 h before being removed. During the process, water and oxygen contents in the glove box is controlled to be less than 0.01 ppm. Moisture contents of the liquid electrolytes before separator soaking and after separator soaking are tested, respectively. The moisture content test results before and after soaking of the separator coated with the Li₄ZrF₈₋2_{X}O_{X} material are listed in Table 2.

### 3. Testing of ternary material (NCM or NCA) coated with Li₄ZrF_{8-2X}O_{X}

2032 coin cells are assembled in an argon-filled glove box, in which the water and oxygen contents are controlled to be less than 0.01 ppm. The coated ternary material (NCM or NCA) is used as the positive electrode, polypropylene is used as the separator, nickel foam is used as a structural support and conductor, and graphite is used as the negative electrode. Liquid electrolytes are prepared by dissolving 1 M LiPF₆ in ethylene carbonate (EC)/dimethyl carbonate (DMC)/diethyl carbonate (EMC) (with a volume ratio of 1:1:1). Half-cells are assembled, and the cells are then sealed under pressure using a sealing machine. After a period of standing, electrochemical performance test is started. Cell testing is conducted at a constant temperature of 25 °C, with a charge-discharge mode as follows: constant current charging followed by constant voltage charging for 30 minutes, and constant current discharging. For cycle performance testing, the cells are first activated with three times of 0.1C low-current charge-discharge, followed by 100 times of constant current charge-discharge at 0.5C. For rate performance testing, the cells are charged and discharged at a constant current of 0.1C within the voltage range of 2.75~4.3 V.

### 4. Blending of Li₄ZrF_{8-2X}O_{X} material in positive electrode plate

The Li₄ZrF_{8-2X}O_{X} material is blended in the positive electrode plate at 1% of the mass of the positive electrode active material. The blended positive electrode plate is used to prepare pouch cells, and capacity retention of the pouch cells after different cycles is tested.

### 5. Blending of Li₄ZrF_{8-2X}O_{X} material in negative electrode plate

The Li₄ZrF_{8-2X}O_{X} material is blended in the negative electrode plate at 1% of the mass of the negative electrode active material. The blended negative electrode plate is used to prepare pouch cells, and the capacity retention of the pouch cells after different cycles is tested.

To further illustrate the present invention, the following provides a description of the preparation method for the lithium-ion battery material and the use thereof provided in the present disclosure in combination with the embodiments, but the description should not be regarded as limiting the scope of protection of the present invention.

### Example 1 (X = 0.15, performing oxygen element doping using lithium zirconate)

### I. Material preparation

1. Zirconium carbonate, hydrofluoric acid (40 wt.% aqueous solution of hydrogen fluoride), lithium carbonate, and lithium zirconate were weighed according to the stoichiometric ratio of Li₄ZrF_{8-2X}O_{X} (X=0.15), wherein the additive amount of hydrofluoric acid was calculated according to the actual proportion of hydrogen fluoride. First, weighed 200.678 g of zirconium carbonate, 385.116 g of hydrofluoric acid, and 144.086 g of lithium carbonate were mixed and reacted for 5 h, followed by filtration to yield the precursor. The precursor was ball-milled with 7.655 g of lithium zirconate in a ball milling medium for 3 h, wherein the ball milling medium was isopropanol, and zirconium balls with a diameter of 1 mm were selected for milling.

The slurry after the ball milling was dried, and the dried powder was sintered in a sintering furnace at 800 °C for 12 h, yielding Li₄ZrF_{7.7}O_{0.15} (X=0.15) powder material.

FIG. 1 shows crystal structure diffraction data of Li₄ZrF_{7.7}O_{0.15} prepared in Example 1. It can be seen that after oxygen doping at the F sites, the crystal structure still belongs to the orthorhombic crystal system, Pnma space group.

### II. Material use and testing

### 1. Ionic conductivity testing

1 g of the Li₄ZrF_{7.7}O_{0.15} material was taken. Using a mold with a diameter of 10 mm, a pressure of 10 MPa was applied in a benchtop powder press, and maintained for 10 min before demolding to obtain a thin sheet. The above thin sheet was placed in a sintering furnace, and heated to 300 °C at a rate of 1 °C, and held at the temperature for 12 h, and then a ceramic sheet required for testing was obtained. The surface of the above ceramic sheet was gently polished using 1000-grit sandpaper moistened with alcohol according to a cross-hatching method to remove surface impurities and ensure uniform electrolyte thickness in all locations. Thickness L of the sintered sheet was measured using a vernier caliper, a gold blocking electrode was deposited using an ion sputtering apparatus, and the ionic conductivity of the Li₄ZrF_{7.7}O_{0.15} material was tested using alternating-current impedance. The test data are shown in test data of the ionic conductivity in Table 1.

### 2. Coating separator with Li₄ZrF_{7.7}O_{0.15}

PE was selected as the base membrane, and the thickness of the base membrane was 5 µm. The base membrane was coated with the Li₄ZrF_{7.7}O_{0.15} material on both sides, where the coating thickness was 1 µm. Liquid electrolytes were prepared by dissolving 1 M LiPF₆ in ethylene carbonate (EC)/dimethyl carbonate (DMC)/diethyl carbonate (EMC) (with a volume ratio of 1:1:1). In an argon-filled glove box, the separator coated on both sides was placed in the liquid electrolytes and soaked at 25 °C for 72 h before being removed. During the process, water and oxygen contents in the glove box were controlled to be less than 0.01 ppm. The moisture contents of the liquid electrolytes before and after separator soaking were tested, respectively, and recorded in Table 2.

### 3. Testing of ternary material (NCM or NCA) coated with Li₄ZrF_{7.7}O_{0.15} material

Li₄ZrF_{7.7}O_{0.15} powder material and ternary positive electrode material NCM811 were weighed at a mass ratio of 1:100, i.e., 10 g of Li₄ZrF_{7.7}O_{0.15} powder material and 1000 g of NCM811 material. The materials were fed into a coating machine with a rotational speed of 200 rpm/min, taken out after 1 h, and held at 600 °C in a sintering furnace for 10 h.

2032 coin cells were assembled in the argon-filled glove box, in which the water and oxygen contents were controlled to be less than 0.01 ppm. The coated ternary material NCM811 was used as the positive electrode, polypropylene (PE) was used as the separator, nickel foam was used as a structural support and conductor, and graphite was used as the negative electrode. Liquid electrolytes were prepared by dissolving 1 M LiPF₆ in ethylene carbonate (EC)/dimethyl carbonate (DMC)/diethyl carbonate (EMC) (with a volume ratio of 1:1:1). Half-cells were assembled, and the cells were then sealed under pressure using a sealing machine. After standing for a period of time, electrochemical performance was tested. The cell testing was conducted at a constant temperature of 25 °C, with a charge-discharge mode as follows: constant current charging followed by constant voltage charging for 30 minutes, and constant current discharging. For cycle performance testing, the cells were first activated with three times of 0.1C low-current charge-discharge, followed by 100 times of constant current charge-discharge at 0.5C. For rate performance testing, the cells were charged and discharged at a constant current of 0.1C within the voltage range of 2.75~4.3 V. The test results are listed in Table 3.

### 4. Blending of Li₄ZrF_{7.7}O_{0.15} material in positive electrode plate

Li₄ZrF_{7.7}O_{0.15} material was blended in the ternary positive electrode plate at 1% of the mass of the positive electrode active material (NCM). The blended positive electrode plate, graphite negative electrode plate, polyolefin separator, and 1 M LiPF₆ were dissolved in ethylene carbonate (EC)/dimethyl carbonate (DMC)/diethyl carbonate (EMC) (with a volume ratio of 1:1:1) to prepare the liquid electrolytes, and pouch cells were prepared. The cycle performance and capacity retention of the pouch cells were tested at a constant temperature of 25 °C. The voltage range was 2.75~4.2 V, and the charge/discharge current was 1.0C/1.0C. The test data are recorded in Table 4.

### 5. Blending of Li₄ZrF_{7.7}O_{0.15} material in negative electrode plate

Li₄ZrF_{7.7}O_{0.15} material was blended in graphite negative electrode plate at 1% of the mass of the graphite negative electrode active material. The blended graphite negative electrode plate, positive electrode plate, polyolefin separator, and liquid electrolytes prepared by dissolving 1 M LiPF₆ in ethylene carbonate (EC)/dimethyl carbonate (DMC)/diethyl carbonate (EMC) (with a volume ratio of 1:1:1) were used to prepare pouch cells. The cycle performance and capacity retention of the pouch cells were tested at a constant temperature of 25 °C. The voltage range was 2.75~4.2 V, and the charge/discharge current was 1.0C/1.0C. The test data are recorded in Table 5.

### Example 2 (X=0.05, performing oxygen element doping using zirconium oxide)

### I. Material preparation

1. Zirconium carbonate, hydrofluoric acid (40 wt.% aqueous solution of hydrogen fluoride), lithium carbonate, and zirconium oxide were weighed according to the stoichiometric ratio of Li₄ZrF_{8-2X}O_{X} (X=0.05), wherein the additive amount of hydrofluoric acid was calculated according to the actual proportion of hydrogen fluoride. First, weighed 205.959 g of zirconium carbonate, 395.119 g of hydrofluoric acid, and 147.78 g of lithium carbonate were mixed and reacted for 5 h, followed by filtration to yield the precursor. The precursor was ball-milled with 3.081 g of zirconium oxide in a ball milling medium for 3 h, wherein the ball milling medium was ethyl alcohol, and zirconium balls with a diameter of 1 mm were selected for milling.

The slurry after the ball milling was dried, and the dried powder was sintered in a sintering furnace at 600 °C for 12 h, yielding Li₄ZrF_{7.9}O_{0.05} (X=0.05) powder material.

### II. Material use and testing

The ion conductivity testing, separator coating testing, positive electrode plate blending testing, and negative electrode plate blending testing were the same as those in Example 1.

When coating the ternary positive electrode material, the Li₄ZrF_{7.9}O_{0.05} powder material and the ternary positive electrode material NCM811 were weighed at a ratio of 1:95, i.e., 10 g of Li₄ZrF_{7.9}O_{0.05} powder material and 950 g of NCM811 material. The materials were fed into a coating machine with a rotational speed of 200 rpm/min, taken out after 1 h, and held at 600 °C in the sintering furnace for 10 h. The assembling of the coin cells and the electrical performance testing were the same as those in Example 1.

### Example 3 (X=0.1, performing oxygen element doping using zirconium oxide)

### I. Material preparation

1. Zirconium carbonate, hydrofluoric acid (40 wt.% aqueous solution of hydrogen fluoride), lithium carbonate, and zirconium oxide were weighed according to the stoichiometric ratio of Li₄ZrF_{8-2X}O_{X} (X=0.1), wherein the additive amount of hydrofluoric acid was calculated according to the actual proportion of hydrogen fluoride. First, weighed 200.678 g of zirconium carbonate, 390.117 g of hydrofluoric acid, and 147.78 g of lithium carbonate were mixed and reacted for 5 h, followed by filtration to yield the precursor. The precursor was ball-milled with 6.161 g of zirconium oxide in a ball milling medium for 4 h, wherein the ball milling medium was n-butanol, and zirconium balls with a diameter of 0.5 mm were selected for milling.

The slurry after the ball milling was dried, and the dried powder was sintered in a sintering furnace at 400 °C for 12 h, yielding Li₄ZrF_{7.8}O_{0.1} (X=0.1) powder material.

### II. Material use and testing

The ion conductivity testing, separator coating testing, positive electrode plate blending testing, and negative electrode plate blending testing were the same as those in Example 1.

Li₄ZrF_{7.8}O_{0.1} powder material and ternary positive electrode material NCM811 were weighed at a weight ratio of 1:100, i.e., 10 g of Li₄ZrF_{7.8}O_{0.1} powder material and 1000 g of NCM811 material. The materials were fed into a coating machine with a rotational speed of 200 rpm/min, taken out after 1 h, and held at 600 °C in the sintering furnace for 10 h. The assembling of the coin cells and the electrical performance testing were the same as those in Example 1.

### Example 4 (X=0.12, performing oxygen element doping using zirconium oxide)

### I. Material preparation

1. Zirconium carbonate, hydrofluoric acid (40 wt.% aqueous solution of hydrogen fluoride), lithium carbonate, and zirconium oxide were weighed according to the stoichiometric ratio of Li₄ZrF_{8-2X}O_{X} (X=0.12), wherein the additive amount of hydrofluoric acid was calculated according to the actual proportion of hydrogen fluoride. First, weighed 198.566 g of zirconium carbonate, 388.116 g of hydrofluoric acid, and 147.78 g of lithium carbonate were mixed and reacted for 5 h, followed by filtration to yield the precursor. The precursor was ball-milled with 7.393 g of zirconium oxide in a ball milling medium for 4 h, wherein the ball milling medium was ethanol, and zirconium balls with a diameter of 1 mm were selected for milling.

The slurry after the ball milling was dried, and the dried powder was sintered in a sintering furnace at 800 °C for 12 h, yielding Li₄ZrF_{7.8}O_{0.1} (X=0.1) powder material.

### II. Material use and testing

The ion conductivity testing, separator coating testing, positive electrode plate blending testing, and negative electrode plate blending testing were the same as those in Example 1.

Li₄ZrF_{7.8}O_{0.1} powder material and ternary positive electrode material NCM811 were weighed at a weight ratio of 1:105, i.e., 10 g of Li₄ZrF_{7.8}O_{0.1} powder material and 1050 g of NCM811 material. The materials were fed into a coating machine with a rotational speed of 200 rpm/min, taken out after 1 h, and held at 600 °C in the sintering furnace for 10 h. The assembling of the coin cells and the electrical performance testing were the same as those in Example 1.

### Example 5 (X=0.14, performing oxygen element doping using zirconium hydroxide)

### I. Material preparation

1. Zirconium carbonate, hydrofluoric acid (40 wt.% aqueous solution of hydrogen fluoride), lithium carbonate, and zirconium hydroxide were weighed according to the stoichiometric ratio of Li₄ZrF_{8-2X}O_{X} (X=0.1), wherein the additive amount of hydrofluoric acid was calculated according to the actual proportion of hydrogen fluoride. First, weighed 196.453 g of zirconium carbonate, 386.116 g of hydrofluoric acid, and 95.792 g of lithium hydroxide were mixed and reacted for 5 h, followed by filtration to yield the precursor. The precursor was ball-milled with 11.148 g of zirconium hydroxide in a ball milling medium for 4 h, wherein the ball milling medium was ethanol, and zirconium balls with a diameter of 1 mm were selected for milling.

The slurry after the ball milling was dried, and the dried powder was sintered in a sintering furnace at 500 °C for 12 h, yielding Li₄ZrF_{7.72}O_{0.14} (X=0.14) powder material.

### II. Material use and testing

The ion conductivity testing, separator coating testing, positive electrode plate blending testing, and negative electrode plate blending testing were the same as those in Example 1.

Li₄ZrF_{7.72}O_{0.14} powder material and ternary positive electrode material NCA were weighed at a weight ratio of 1:100, i.e., 10 g of Li₄ZrF_{7.72}O_{0.14} powder material and 1000 g of NCA material. The materials were fed into a coating machine with a rotational speed of 200 rpm/min, taken out after 1 h, and held at 600 °C in the sintering furnace for 10 h. The assembling of the coin cells and the electrical performance testing were the same as those in Example 1.

### Comparative Example 1

### I. Material preparation

1. Zirconium carbonate, hydrofluoric acid (40 wt.% aqueous solution of hydrogen fluoride), and lithium carbonate were weighed according to the stoichiometric ratio of Li₄ZrF₈₋2_{X}O_{X} (X=0), wherein the additive amount of hydrofluoric acid was calculated according to the actual proportion of hydrogen fluoride. First, weighed 211.24 g of zirconium carbonate, 400.12 g of hydrofluoric acid, and 147.78 g of lithium carbonate were mixed and reacted for 5 h, followed by filtration to yield the precursor, and Li₄ZrF₈ was obtained.

### II. Material use and testing

The ion conductivity testing, separator coating testing, positive electrode plate blending testing, and negative electrode plate blending testing were the same as those in Example 1.

Li₄ZrF₈ powder material and ternary positive electrode material NCA were weighed at a weight ratio of 1:100, i.e., 10 g of Li₄ZrF₈ powder material and 1000 g of NCA material. The materials were fed into a coating machine with a rotational speed of 200 rpm/min, taken out after 1 h, and held at 400 °C in a sintering furnace for 10 h. The assembling of the coin cells and the electrical performance testing were the same as those in Example 1.

The data of ionic conductivity testing of the examples and comparative examples are listed in Table 1; the moisture content testing results before and after soaking of the separators coated with the Li₄ZrF_{8-2X}O_{X} material are listed in Table 2; the data of electrical performance testing after coating the positive electrodes are listed in Table 3; the testing results of the assembled pouch cells after coating the positive electrode plates with the Li₄ZrF_{8-2X}O_{X} material are listed in Table 4; and the testing results of the assembled pouch cells after coating the negative electrode plates with the Li₄ZrF_{8-2X}O_{X} material are listed in Table 5.

**Table 1 Ion Conductivity Testing of Li₄ZrF_{8-2X}O_{X} Material**

| | Ion conductivity (S/cm) |
|---|---|
| Example 1 | 43×10⁻⁴ |
| Example 2 | 2.1×10⁻⁴ |
| Example 3 | 3.3×10⁻⁴ |
| Example 4 | 3.1×10⁻⁴ |
| Example 5 | 3.8×10⁻⁴ |
| Comparative Example 1 | 7.5×10⁻⁶ |

The lithium-ion battery material Li₄ZrF_{8-2X}O_{X} prepared in Examples 1-5 of the present invention reacted with trace amounts of water in the liquid electrolytes to generate hydroxyl groups on the surface of the Li₄ZrF_{8-2X}O_{X} material.

**Table 2 Moisture Content Testing Before and After Soaking of Separators Coated with Li₄ZrF_{8-2X}O_{X} Material**

| | Moisture Content Before Soaking (ppm) | Moisture Content After Soaking (ppm) |
|---|---|---|
| Example 1 | 48 | 7 |
| Example 2 | 46 | 6 |
| Example 3 | 47 | 5 |
| Example 4 | 45 | 4 |
| Example 5 | 43 | 5 |
| Comparative Example 1 | 46 | 45 |

**Table 3 Testing of Assembled Coin Cells after Coating Positive Electrodes with Li₄ZrF_{8-2X}O_{X} Material**

| | Electrochemical Performance of Positive Electrode | | | |
|---|---|---|---|---|
| | 0.1C initial charge and discharge | | Capacity retention 0.5C@50 cycles | Capacity retention 0.5C@100 cycles |
| | Specific discharge capacity (mAh/g) | Coulombic efficiency (%) | | |
| Example 1 | 193.6 | 91 | 96 | 94 |
| Example 2 | 189.4 | 90 | 93 | 92 |
| Example 3 | 191.2 | 91 | 94 | 92 |
| Example 4 | 190.5 | 92 | 92 | 91 |
| Example 5 | 187.9 | 91 | 95 | 94 |
| Comparative Example 1 | 189.2 | 88 | 84 | 72 |

**Table 4 Testing of Assembled Pouch Cells after Coating Positive Electrode Plates with Li₄ZrF_{8-2X}O_{X} Material**

| | Capacity Retention | | |
|---|---|---|---|
| | 0 cycles | 100 cycles | 200 cycles |
| Example 1 | 100% | 97.63% | 89.31% |
| Example 2 | 100% | 97.58% | 89.64% |
| Example 3 | 100% | 97.85% | 89.37% |
| Example 4 | 100% | 97.74% | 89.65% |
| Example 5 | 100% | 97.71% | 89.87% |
| Comparative Example 1 | 100% | 85.14% | 70.65 % |

**Table 5 Testing of Assembled Pouch Cells after Coating Negative Electrode Plates with Li₄ZrF_{8-2X}O_{X} Material**

| | Capacity Retention | | |
|---|---|---|---|
| | 0 cycles | 100 cycles | 200 cycles |
| Example 1 | 100% | 97.48% | 89.47% |
| Example 2 | 100% | 97.34% | 89.37% |
| Example 3 | 100% | 97.66% | 89.59% |
| Example 4 | 100% | 97.83% | 89.67% |
| Example 5 | 100% | 97.74% | 89.35% |
| Comparative Example 1 | 100% | 84.23% | 71.32% |

As can be seen from the above examples, the present invention provides a lithium-ion battery material, wherein a structural formula of the lithium-ion battery material is Li₄ZrF_{8-2X}O_{X}, where 0 < X ≤ 0.15. The present invention performs oxygen doping on the Li₄ZrF₈ material with a zirconium-containing oxide, and a composition of doped material is Li₄ZrF_{8-2X}O_{X}. Oxygen doping at the F sites achieves a significant improvement in the ionic conductivity of the Li₄ZrF₈ material.

The present invention further provides a solid-state electrolyte material for hybrid solid-liquid systems. When applied to lithium-ion batteries, the Li₄ZrF_{8-2X}O_{X} material is in full contact with the liquid electrolytes. Current commercial liquid electrolytes contain trace amounts of moisture (≤ 50 ppm). Because the electronegativity of fluorine element is much greater than that of hydrogen and oxygen elements, fluoride bonds formed with metal ions are extremely stable and less prone to breaking. Therefore, it is difficult for fluoride crystals to generate free metal ions and fluoride ions on their surface, thus preventing reaction with water molecules to generate hydroxyl groups. The present invention changes surface state of the Li₄ZrF_{8-2X}O_{X} material through oxygen doping at the F sites. When in contact with the liquid electrolytes, the Li₄ZrF₈₋2_{X}O_{X} material can react with trace amounts of water in the liquid electrolytes, and water binds to parts of the Li₄ZrF_{8-2X}O_{X} material surfaces, generating Li₄ZrF_{8-2X}O_{X}·(OH)_{y}, thereby eliminating a certain amount of water from the liquid electrolytes, while effectively reducing hydrolysis side reactions of LiPF₆.

Experimental results indicate that the ionic conductivity of the Li₄ZrF_{8-2X}O_{X} material was 2.1×10⁻⁴∼4.3×10⁻⁴ S/m; after soaking the separator coated with the Li₄ZrF_{8-2X}O_{X} material in the liquid electrolytes, the moisture content of the liquid electrolytes decreased from 43~48 ppm to a range of 4~7 ppm; the capacity retention of the coated ternary positive electrode was 92~96% at 0.5C@50 cycles and 91~94% at 0.5C@100 cycles; the positive electrode plate prepared by blending the Li₄ZrF_{8-2X}O_{X} material in the positive electrode active material NCM, tested in the voltage range of 2.75-4.2 V and the charge/discharge current of 1.0C/1.0C, exhibited the capacity retention of 97.58-97.71% over 100 cycles, and the capacity retention of 89.31-89.97% over 200 cycles; and the negative electrode plate prepared by blending the Li₄ZrF_{8-2X}O_{X} material in the negative electrode active material, tested in the voltage range of 2.75-4.2 V and the charge/discharge current of 1.0C/1.0C, exhibited the capacity retention of 97.34-97.74% over 100 cycles, and the capacity retention of 89.35-89.67% over 200 cycles.

The above description is merely for preferred embodiments of the present invention. It should be noted that for those ordinarily skilled in the art, several improvements and modifications could be made without departing from the principles of the present invention, and these improvements and modifications should also be considered within the scope of protection of the present invention.

### INDUSTRIAL APPLICABILITY

The present invention provides a lithium-ion battery material, wherein the structural formula of the lithium-ion battery material is Li₄ZrF_{8-2X}O_{X}, where 0 < X ≤ 0.15. The present invention performs the oxygen doping on the Li₄ZrF₈ material with a zirconium-containing oxide, and a composition of doped material is Li₄ZrF_{8-2X}O_{X}. Oxygen doping at the F sites achieves a significantly improvement in the ionic conductivity of the Li₄ZrF₈ material. In addition, the preparation method for the lithium-ion battery material is simple and easy to implement.

The present invention further provides a solid-state electrolyte material for hybrid solid-liquid systems. When applied to lithium-ion batteries, Li₄ZrF_{8-2X}O_{X} material is in full contact with the liquid electrolytes. Current commercial liquid electrolytes contain trace amounts of moisture (≤ 50 ppm). Because the electronegativity of fluorine element is much greater than that of hydrogen and oxygen elements, fluoride bonds formed with metal ions are extremely stable and less prone to breaking. Therefore, it is difficult for fluoride crystals to generate free metal ions and fluoride ions on their surface, thus preventing reaction with water molecules to generate hydroxyl groups. The present invention changes surface state of the Li₄ZrF_{8-2X}O_{X} material through oxygen doping at the F sites. When in full contact with the liquid electrolytes, the Li₄ZrF_{8-2X}O_{X} material can react with the trace amounts of water (≤ 50 ppm) in the liquid electrolytes, thus generating hydroxyl groups on parts of the surface of the Li₄ZrF_{8-2X}O_{X} material, forming Li₄ZrF_{8-2X}O_{X}·(OH)_{y}, which is conducive to eliminating the moisture from the liquid electrolytes, while effectively reducing hydrolysis side reactions of LiPF₆.

## Claims

1. A lithium-ion battery material, **characterized in that** a structural formula of the lithium-ion battery material is Li₄ZrF_{8-2X}O_{X}, wherein 0 < X ≤ 0.15.

2. A preparation method for the lithium-ion battery material according to claim 1, **characterized by** comprising steps of:
mixing a zirconium source, a lithium source, and a fluorine-containing acid solution, followed by reacting and filtering to obtain a precursor;
ball-milling the precursor and a zirconium-containing oxide in a medium to obtain a slurry; and
subjecting the slurry to drying and sintering, to obtain the lithium-ion battery material having a following general formula:
Li₄ZrF_{8-2X}O_{X},
wherein 0 < X ≤ 0.15.

3. The preparation method according to claim 2, **characterized in that** the zirconium source is zirconium carbonate; and the lithium source is selected from lithium carbonate and/or lithium hydroxide.

4. The preparation method according to claim 2, **characterized in that** the fluorine-containing acid solution is hydrofluoric acid.

5. The preparation method according to claim 2, **characterized in that** the zirconium-containing oxide is one or more selected from the group consisting of zirconium oxide, lithium zirconate, and zirconium hydroxide.

6. The preparation method according to claim 2, **characterized in that** the medium is one or more selected from the group consisting of ethanol, isopropanol, n-butanol, n-hexane, N-methylpyrrolidone, acetonitrile, dimethylformamide, and dimethyl sulfoxide.

7. The preparation method according to claim 2, **characterized in that** a temperature of the sintering is 400~800 °C, and a duration of the sintering is 12~24 h.

8. Use of the lithium-ion battery material according to claim 1 or the lithium-ion battery material prepared by the preparation method according to any one of claims 2 to 7, as a solid-state electrolyte, in positive electrode coating materials, liquid electrolyte additives, positive electrode plate additives, negative electrode plate additives, or separator coating materials.

9. A coating process for a positive electrode material, **characterized by** comprising steps of:
using the lithium-ion battery material Li₄ZrF_{8-2X}O_{X} according to claim 1 as a solid-state electrolyte, coating the lithium-ion battery material on a surface of the positive electrode material, followed by sintering.

10. The coating process for the positive electrode material according to claim 9, **characterized in that** a temperature of the sintering is 300~600 °C and a duration of the sintering is 5~10 h.

11. The coating process for the positive electrode material according to claim 9, **characterized in that** a rotational speed of coating equipment is 10~550 rpm, and a duration of the coating is 1~3 h.

12. A solid-state electrolyte material for hybrid solid-liquid systems, **characterized by** comprising the lithium-ion battery material Li₄ZrF_{8-2X}O_{X} according to claim 1 and liquid electrolytes.

13. The coating process for the positive electrode material according to claim 12, **characterized in that** the liquid electrolytes comprise LiPF₆.

14. A use of a solid-state electrolyte material for hybrid solid-liquid systems, **characterized in that** the solid-state electrolyte material for hybrid solid-liquid systems according to claim 7 is applied to energy storage systems of lithium-ion batteries, sodium-ion batteries, potassium-ion batteries, aluminum-ion batteries, and fuel cells.

15. A battery, **characterized by** comprising an electrode plate and liquid electrolytes, wherein the electrode plate comprises an active material and the lithium-ion battery material according to claim 1 or the lithium-ion battery material prepared by the preparation method according to any one of claims 2 to 7 blended in the active material.

16. The battery according to claim 15, **characterized in that** the liquid electrolytes comprises LiPF₆.

17. A battery, **characterized by** comprising a coated separator and liquid electrolytes, wherein
the coated separator comprises a base membrane and the lithium-ion battery material according to claim 1 or the lithium-ion battery material prepared by the preparation method according to any one of claims 2 to 7 coated on a surface of the base membrane.

18. The battery according to claim 17, **characterized in that** the liquid electrolytes comprise LiPF₆.
